Europäisches Patentamt

European Patent Office

Office européen des brevets

(19)

(11) Publication number: **0 046 689**

**A1**

(12) # EUROPEAN PATENT APPLICATION

(21) Application number: **81303877.5**

(22) Date of filing: **25.08.81**

(51) Int. Cl.³: **B 65 G 15/34**

(30) Priority: **26.08.80 US 181402**

(43) Date of publication of application:
**03.03.82 Bulletin 82/9**

(84) Designated Contracting States:
**DE FR GB**

(71) Applicant: **THE FIRST NATIONAL BANK OF AKRON, TRUSTEE**
**106 South Main Street**
**Akron Ohio 44308(US)**

(72) Inventor: **McGinnis, Hebert E.**
**1638 Cleveland-Massillon Road**
**Akron Ohio 44321(US)**

(74) Representative: **Bass, John Henton et al,**
**REDDIE & GROSE 16 Theobalds Road**
**London WC1X 8PL(GB)**

(54) Stretchable belt conveyor system and belt construction.

(57) A belt conveyor system has a stretchable belt reinforced by a layer of stretch fabric (16) which includes crimped high strength warp cords (17) woven around transverse cords (18). Low strength warp cords (19) are woven around the transverse cords (18) in an opposite direction to hold the high strength cords (17) in the crimped condition prior to and during molding of the belt. Upon installation the belt is stretched at least 5 percent and the low strength warp cords (19) are broken. The high strength warp cords (17) are then straightened out which results in a substantial increase in the resistance of the belt to further stretching after installation on the conveyor.

FIG. 5

FIG. 6

EP 0 046 689 A1

- 1 -

## STRETCHABLE BELT CONVEYOR
## SYSTEM AND BELT CONSTRUCTION

This invention relates to conveyors for bulk material in which the conveyor belt has a construction which permits initial stretching prior to installation on the conveyor and then has a rapidly increasing resistance to further stretching after the belt is installed on the conveyor. The initial stretching of the belt provides stiffening of the belt and also creates a beam effect for supporting the lengths of belt between the supporting idler rollers.

It has been proposed to provide stretchability of a belt by reinforcing the belt with bias cord plies which pantograph to provide the initial stretch and then provide increased resistance to stretch after the belt is mounted on the conveyor. One of the difficulties of using bias cord plies is that the force required to obtain the desired tension may be substantial and therefore increase the structural requirements of the belt conveyor system.

Belt constructions have been proposed in which the reinforcement includes a stretchable fabric with loosely woven or crimped warp cords to provide the stretchability. In one case the central longitudinal strands were tightly woven and the outer longitudinal strands were loosely woven to provide different resilience at the edges and center of the belt. A stretchable belt is described and shown in my U.S. Patent No. 4,061,223.

In another case the longitudinal reinforcing warp cords were crimped or molded in the belt at a length less the actual length of the cords in the straightened-out condition to provide stiffness of the belt. In still another case the longitudinal warp cords were molded in the crimped condition so that there would be a nominal stretching of the belt during installation and during operation, but when the belt was overloaded and the load exceeded the normal working load the belt could elongate over 10 percent before breaking. The crimp in the load-carrying reinforcing warp cords of the belt was maintained until the load on the belt exceeded the normal working load.

In another case the belt was pretensioned by stretching the belt just prior to closing of the belt press so that after vulcanization the belt would be under tension over the entire width prior to installation.

The present invention is directed to a stretchable conveyor belt for a belt conveyor system in which the belt has a length in the molded condition of not more than 95 percent of the conveyor system belt path. The belt is reinforced by a layer of high strength longitudinally extending reinforcing cords which have a crimped configuration in the molded condition of the belt to provide for stretching of the belt at least 5 percent during installation. When the high strength reinforcing cords are straightened out, they provide a high resistance to further elongation of the belt in the operating condition. The longitudinally extending reinforcing cords of the belt may be woven between transverse cords and held in this position during molding by low strength longitudinally extending positioning cords. After molding of the belt, the low strength positioning cords may be broken by stretching of the belt prior to or during installation on the conveyor system. This permits the displacement of the transverse cords by the longitudinally extending reinforcing cords in response to stretching of the belt in an amount exceeding the breaking point of the positioning cords but below the breaking point of the reinforcing cords.

In the drawings:

Fig. 1 is a schematic elevation of a load-carrying belt conveyor system including the stretchable conveyor belt.

Fig. 2 is a schematic elevation of the stretchable conveyor belt in the molded condition prior to installation on the conveyor of Fig. 1.

Fig. 3 is an enlarged cross-sectional view of the belt shown in Figs. 1 and 2 with parts being broken away.

Fig. 4 is a fragmentary cutaway plan view of the belt of Fig. 3 showing the location of the cords in the molded condition of the belt.

Fig. 5 is an enlarged schematic view showing the positions of the cords in the molded belt.

Fig. 6 is a view like Fig. 5 showing the position of the cords after the belt has been stretched prior to or during mounting on the conveyor system.

Fig. 7 is a graph showing the relationship between the elongation of the belt and the tension in the belt.

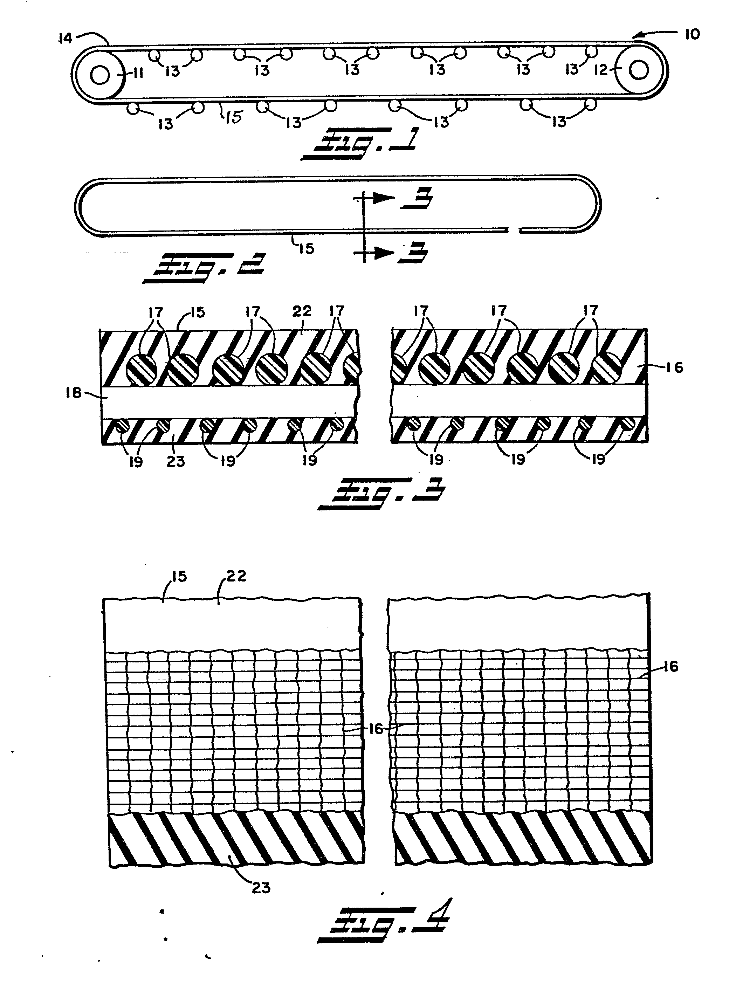

Referring to Fig. 1, a belt conveyor system 10 is shown for carrying a load from a tail pulley 11 to a discharge pulley 12. Support rollers 13 are positioned at longitudinally spaced-apart locations defining a belt path 14 extending over the support rollers and around the tail pulley 11 and discharge pulley 12. The belt path 14 has a predetermined length and stretchable molded conveyor belt 15 is installed along the belt path in a stretched condition.

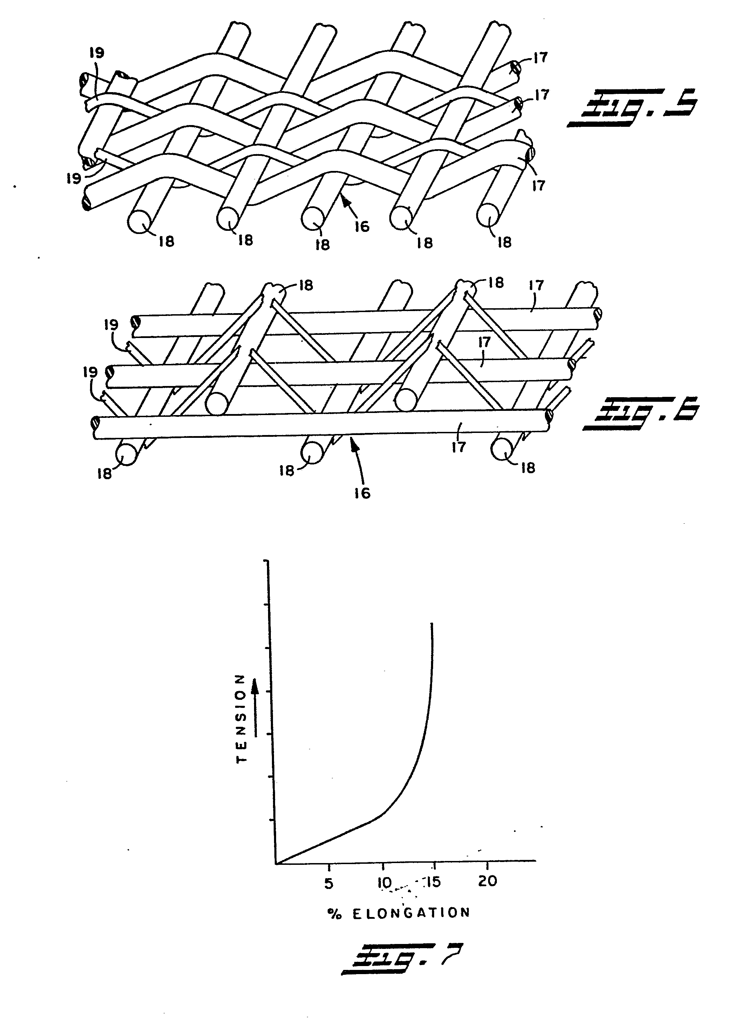

The stretchable conveyor belt 15 is of elastomeric material such as rubber or other rubberlike material and contains a reinforcing layer 16 of stretch fabric shown in greater detail in Figs. 3, 4, 5 and 6. The reinforcing layer 16 contains longitudinally extending reinforcing cords such as high strength warp cords 17 and spaced-apart transverse cords such as weft cords 18. The reinforcing layer 16 also contains longitudinally extending positioning cords such as low strength warp cords 19 for maintaining the high strength warp cords 17 in a crimped configuration such as that shown in Fig. 5. By "crimped" is meant the configuration of the high strength warp cords 17 shown in Fig. 5 wherein the cords have a length which is less than the length of the straightened cords as shown in Fig. 6. As shown in Fig. 5, the high strength warp cords 17 are woven between the weft cords 18 in one direction while the low strength warp cords 19 are woven between the weft cords in another direction. This square woven fabric is maintained in substantially the same configuration shown in Fig. 5 during the fabrication and molding of the belt 15.

After molding of the belt 15, it is stretched causing the low strength warp cords 19 to break as shown in Fig. 6. The high strength warp cords 17 are then straightened out and assume the configuration shown in Fig. 6. This provides for stretching of the belt 15 from a length in the molded condition, shown in Fig. 2, to a length in the stretched condition, shown in Fig. 1. Preferably the belt 15 has a length in the molded condition of not more than 95 percent of the predetermined length of the belt path 14.

Prior to and during molding of the belt 15, the weft cords 18, as shown in Fig. 5, are in substantially the same plane. However, after molding and stretching of the belt 15, the weft cords 18 are displaced by the straightening of the high strength warp cords 17 from that plane to a configuration somethat like that shown in Fig. 6. This is the configuration that the reinforcing layer 16 will have after installation on the conveyor system 10 in the belt path 14. The low strength warp cords 19 have sufficient strength to maintain the high strength warp cords 17 in the crimped condition during the fabrication and molding of the belt 15; however, during the stretching of the belt for installation the tension in the low strength warp cords will exceed the breaking point and permit the straightening out of the high strength warp cords 17.

As shown in Fig. 7, the tension required for the initial elongation of the belt while the high strength warp cords 17 are being straightened may be nominal; however, after installation of the belt on the conveyor system 10 with the high strength warp cords straightened, the tension required for further elongation is substantial. This is desirable because in a belt conveyor system 10 such as that shown the high resistance to further elongation of the belt after installation eliminates the need for a take-up and also provides a rigidity or beam effect of the belt so that the distance between support rollers 13 may be increased and the number of rollers required decreased.

It is understood that although only one reinforcing layer 16 is shown for the belt 15, other layers of stretch fabric may be added as needed for a particular belt application. The layer 16 of stretch fabric may also be used with other layers of reinforcing cords positioned at different angles to the transverse axis of the belt.

In the embodiment shown, the reinforcing layer 16 is of square woven fabric and the high strength warp cords 17 are of a high strength polyester having a high modulus of elasticity and being spaced at about sixteen ends per inch. The low strength warp cords 19 are of low strength nylon or cotton with a maximum 6 percent elongation and a breaking strength of not more than one hundred pounds per inch of the layer width. The weft cords 18 are of polyester fill material spaced at about seven ends per inch. Consequently the high strength warp cords 17 are released from the crimped condition when the low strength warp cords 19 are stressed beyond the breaking point after being elongated up to 6 percent.

The elastomeric material of the belt 15 may be highly stretchable and have a hardness on the durometer scale of from about 60 to 80. For installations in coal mines the material may be a flame-resistant elastomer. For aboveground operations, the material of the belt 15 may be of any conventional wear-resistant rubber. For example, those known as GRS and SBR rubbers

0046689

- 7 -

are suitable. It is important during the operation of the belt 15 that the elastomeric material which is stretched at least 5 percent provide a minimum tension force in the belt to minimize the sagging of the belt between the rollers 13.

A top cover 22 is provided which may be of the same resilient material as the rest of the belt or may be of a more wear-resistant material because the belt surface is exposed to abrasion from the material to be conveyed. A bottom cover 23 is also provided which may be of the same material as the rest of the belt 15.

The stretch fabric of the reinforcing layer 16 is also shown in the belts of my patent application Serial No.               filed concurrently with this application.

While a certain representative embodiment and details have been shown for the purpose of illustrating the invention, it will be apparent to those skilled in the art that various changes and modifications may be made therein without departing from the invention.

- 8 -

## CLAIMS

1. A stretchable conveyor belt comprising an elongated body of elastomeric material adapted for installation on a conveyor having a belt path of a predetermined length, said belt having a length in the molded condition of not more than 95 percent of said predetermined length of said belt path, a reinforcing layer in said belt, said layer containing longitudinally extending reinforcing cords, said longitudinally extending reinforcing cords having a crimped configuration in the molded condition of said belt to provide for stretching of the belt at least 5 percent during installation, said longitudinally extending reinforcing cords being substantially straightened in response to stretching of said belt to said predetermined length of said belt path upon installation on said conveyor and then having a high resistance to further elongation of the belt.

2. A stretchable conveyor belt according to claim 1 wherein said reinforcing layer includes transverse cords, said longitudinally extending reinforcing cords being woven between said transverse cords in the molded condition and said transverse cords being displaced by the straightening of said longitudinally extending reinforcing cords upon elongation of said belt for installation on said conveyor.

3. A stretchable conveyor belt according to claim 2 wherein said transverse cords are in substantially the same plane in the molded condition of the belt and at least some of said cords are displaced out of said plane by the straightening of said longitudinally extending reinforcing cords.

4. A stretchable conveyor belt according to claim 3 wherein said reinforcing layer includes longitudinally extending positioning cords for locating said longitudinally extending reinforcing cords in the molded condition of said belt and said positioning cords having a breaking point less than the breaking point of said reinforcing cords permitting the displacement of said transverse cords by said longitudinally extending reinforcing cords in response to stretching of said belt in an amount exceeding the breaking point of said positioning cords and below the breaking point of said reinforcing cords so that said reinforcing cords may be substantially straightened out after installation of the belt on the conveyor.

5. A stretchable conveyor belt according to claim 4 wherein said reinforcing layer is of square woven fabric.

6. A conveyor belt according to claim 4 wherein said longitudinally extending reinforcing cords are of high strength polyester having a high modulus of elasticity and spaced at about sixteen ends per inch, said positioning cords being of low strength nylon or cotton with a maximum 6 percent elongation and a breaking strength of not more than one hundred pounds per inch of the layer with said transverse cords being of polyester fill material spaced at about seven ends per inch.

7. A conveyor belt according to claim 4 wherein said longitudinally extending positioning cords are stretched beyond the breaking point at not more than 6 percent elongation of the belt.

8. A load-carrying belt conveyor system comprising support rollers positioned at longitudinally spaced-apart locations on said system defining a belt path, said belt path having a predetermined length, a stretchable molded conveyor belt of elastomeric material installed on said system along said belt path, said belt having a length in the molded condition of not more than 95 percent of said predetermined length of said belt path, a reinforcing layer in said belt, said layer containing longitudinally extending reinforcing cords, said longitudinally extending reinforcing cords having a crimped configuration in the molded condition of said belt to provide for stretching of the belt at least 5 percent during installation, said longitudinally extending reinforcing cords being substantially straightened in response to stretching of said belt to said predetermined length of said belt path upon installation on said conveyor system and then having a high resistance to further elongation of the belt.

9. A load carrying belt conveyor system according to claim 8 wherein said reinforcing layer of said conveyor belt contains spaced-apart transverse cords, said longitudinally extending reinforcing cords being woven between said transverse cords in the molded condition and said transverse cords being displaced by the straightening of said longitudinally extending reinforcing cords upon elongation of said belt after installation on said conveyor.

10. A load carrying belt conveyor system according to claim 9 wherein said transverse cords of said conveyor belt are in substantially the same plane in the molded condition of the belt and at least some of said transverse cords are displaced from said plane by the straightening of said longitudinally extending reinforcing cords.

11. A load carrying belt conveyor system according to claim 10 wherein said reinforcing layer of said belt contains longitudinally extending positioning cords for locating said longitudinally extending reinforcing cords in the molded condition of said belt and said positioning cords having a breaking point less than the breaking point of said reinforcing cords for permitting the displacement of said transverse cords by stretching said belt beyond the breaking point of said positioning cords but below the breaking point of said reinforcing cords prior to or during installation of the belt on said conveyor so that said reinforcing cords will be substantially straightened out after installation of the belt on the conveyor.

Fig. 1

Fig. 2

Fig. 3

Fig. 4

2/2

0046689

Fig. 5

Fig. 6

TENSION

5    10   15   20

% ELONGATION

Fig. 7

0046689

## DOCUMENTS CONSIDERED TO BE RELEVANT

| Category | Citation of document with indication, where appropriate, of relevant passages | Relevant to claim |
|---|---|---|
| X | GB - A - 1 017 554 (R. POESCHL)<br><br>* page 4, lines 69-110; figure *<br><br>-- | 1,2,3,4,8,10 |
| | GB - A - 903 946 (BTR IND.)<br><br>* claims 1,4,6,8,10; figures *<br><br>-- | 1,2,8 |
| | FR - A - 1 412 238 (DUNLOP RUBBER COMP. LIM.)<br><br>* page 3, column 1, line 4 to page 4, column 2, line 20; figure 2 *<br><br>-- | 1,2,6,10 |
| | FR - A - 1 420 748 (BRITISH BELTING & ASBESTOS LIM.)<br><br>* page 2, column 1, line 10 to page 3, column 2, line 8 *<br><br>-- | 1 |
| P | EP - A - 0 024 777 (AKZO N.V.)<br><br>* abstract; figures *<br><br>-- | 1 |
| A | GB - A - 956 187 (UNITED STATES RUBBER COMP.) | 1 |
| D | US - A - 4 061 223 (AT THE APPLICANTS NAME)<br><br>-------- | 1 |

### CLASSIFICATION OF THE APPLICATION (Int. Cl.³)

B 65 G 15/34

### TECHNICAL FIELDS SEARCHED (Int. Cl.³)

B 65 G

### CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 25-11-1981 | VAN ROLLEGHEM |